# EUROPÄISCHE PATENTANMELDUNG

(11) **EP 2 302 558 A2**
(43) Veröffentlichungstag der Anmeldung: **30.03.2011**
(21) Anmeldenummer: 10177604.5
(22) Anmeldetag: 20.09.2010
(51) Int. Cl.: G06K 7/00

(54) **System zum zuverlässigen Auslesen von RFID Tags unter erschwerten Bedingungen**

(30) Priorität: 21.09.2009 AT 14862009
(71) Anmelder: TRECHIP, 8861 St. Georgen ob Murau (AT)
(72) Erfinder: Dulnigg, Walter, 8010 Graz (AT)
(74) Vertreter: Röggla, Harald

(57) **Zusammenfassung**

Die Erfindung betrifft ein System (1) zum Auslesen von Daten aus an Produkten (C) angebrachten kontaktlos auslesbaren passiven RFID Tags (T), wobei eine Vielzahl an Produkten (C) in einer Verpackungseinheit (P) vorgesehen sein kann und wobei ein zumindest eine Antenne aufweisender fix montierter RFID Reader zum kontaktlosen Auslesen der in den RFID Tags (T) gespeicherten Daten ausgebildet ist und wobei der RFID Reader zumindest eine positionierbare Antenne (A) aufweist, die zum verbesserten Auslesen der in den RFID Tags (T) gespeicherten Daten für den Lesevorgang zumindest teilweise in die Verpackungseinheit (P) einbringbar ist.

## Beschreibung

Die Erfindung bezieht sich auf ein System zum Auslesen von Daten aus an Produkten angebrachten kontaktlos auslesbaren passiven Radio Frequency Identification (RFID) Tags, wobei eine Vielzahl an Produkten in einer Verpackungseinheit vorgesehen sein kann und wobei ein zumindest eine Antenne aufweisender fix montierter RFID Reader zum kontaktlosen Auslesen der in den RFID Tags gespeicherten Daten ausgebildet ist.

Die Erfindung bezieht sich weiters auf ein Verfahren zum Auslesen von Daten aus an Produkten angebrachten kontaktlos auslesbaren passiven Radio Frequency Identification (RFID) Tags mit einem zumindest eine Antenne aufweisenden fix montierten RFID Reader, wobei folgende Verfahrensschritte durchgeführt werden: Positionieren einer eine Vielzahl an Produkten enthaltenden Verpackungseinheit in dem von der zumindest einen Antenne erzeugbaren elektromagnetischen Wechselfeld und Auslesen der RFID Tags mit dem RFID Reader.

Die Erfindung bezieht sich weiters auf einen RFID Reader zur Verwendung in einem System gemäß vorstehendem Absatz.

Ein solches System ist beispielsweise aus dem Dokument US 2006/0197651A1 bekannt. Das bekannte System weist einen RFID Reader auf, um Daten aus passiven RFID Tags kontaktlos auszulesen. Der RFID Reader erzeugt ein elektromagnetisches Wechselfeld im UHF Frequenzbereich, das von den RFID Tags empfangen wird, um einerseits Energie in den passiven RFID Tags zu erzeugen und um andererseits die kontaktlose Kommunikation über das elektromagnetische Wechselfeld durchzuführen. Solche Systeme werden bereits vielfach zur Lagerhaltung von Produkten des täglichen Bedarfs verwendet und die RFID Tags ersetzen bereits teilweise den auf Produkten angebrachten Bar-Code. Hierfür ist an jedem einzelnen Produkt ein RFID Tag angebracht und die Produkte werden in Verpackungseinheiten geliefert, die eine Vielzahl an solchen Produkten enthalten. So ein Produkt könnte beispielsweise eine Parfümflasche sein, wobei vom Hersteller ein Karton mit 1.000 Stück Parfümflaschen zum Großhändler angeliefert wird. Bei der Wareneingangskontrolle wird der Karton beispielsweise mit einem Hubstapler zu einem fix montierten RFID Reader gefahren und innerhalb von Sekunden wird am Display des RIFD Readers angezeigt, wie viele Parfümflaschen in dem Karton sind und ob sich gegebenenfalls eine Parfümflasche mit falschem beziehungsweise nicht bestelltem Duft (=anderer im RFID Tag gespeicherter Produktcode) in den Karton verirrt hat.

Diese Art der Wareneingangskontrolle mit RFID Readern funktioniert sehr gut, solange die Verpackungseinheit und die darin enthaltenen Produkte keinen flüssigen Inhalt haben und trocken in LKWs angeliefert und im Innenbereich in Lagerhallen gelagert werden. Beispielsweise wurden aber auch Christbäume mit RFID Tags versehen und auf Paletten mit je etwa 500 Christbäumen angeliefert. Die Christbäume wurden nach dem Schneiden in Wald im Außenbereich gelagert und dann im Dezember auf offenen LKWs angeliefert. Auf den Christbäumen und deren RFID Tags befand sich somit Eis oder Schnee oder ein Flüssigkeitsfilm. Hierbei hat sich gezeigt, dass der RFID Reader nur etwa 50-60% der RFID Tags an den Christbäumen in einer Palette detektierte und somit vollkommen falsche oder zumindest unzuverlässige Daten anzeigte.

Der Erfindung liegt die Aufgabe zugrunde, ein System, ein Verfahren und einen RFID Reader zum Auslesen von an Produkten angebrachten RFID Tags zu schaffen, bei dem auch bei im Außenbereich auftretenden Bedingungen (z.B. hohe Feuchtigkeit, hohe oder niedrige Temperaturen, Schnee, Regen, Eis) oder wenn Flüssigkeiten in den Produkten enthalten sind jeder RFID Tag zuverlässig detektiert und ausgelesen werden kann.

Die Erfindung löst diese Aufgabe durch ein System, bei dem der RFID Reader zumindest eine positionierbare Antenne aufweist, die zum verbesserten Auslesen der in den RFID Tags gespeicherten Daten für den Lesevorgang zumindest teilweise in die Verpackungseinheit einbringbar ist.

Die Erfindung löst diese Aufgabe weiters durch ein Verfahren bei dem zumindest eine positionierbare Antenne zum verbesserten Auslesen der in den RFID Tag gespeicherten Daten für den Lesevorgang zumindest teilweise in die Verpackungseinheit eingebracht wird.

Hierdurch ist der Vorteil erhalten, dass die positionierbare Antenne zumindest teilweise in die Produkte gesteckt werden kann und somit näher an die auszulesenden RFID Tags herangebracht werden kann als die fix montierten Antennen des RFID Readers. Diese zumindest eine positionierbare Antenne gibt vor und auch während des Auslesevorgangs der RFID Tags das elektromagnetische Wechselfeld des RFID Readers ab. Dadurch, dass die positionierbare Antenne sehr nahe an weiter innen in der Verpackungseinheit liegenden Produkten zu liegen kommt, werden auch die weiter innen liegenden RFID Tags oder die durch Vereisung oder Schnee oder durch Flüssigkeiten in den Produkten abgeschirmten RFID Tags ausreichend mit Energie versorgt, um sich bei dem RFID Reader zu melden und an der anschließend stattfindenden Kommunikation mit dem RFID Reader teilzunehmen. Die RFID Tags werden somit von den außen liegenden fixen Antennen und zusätzlich durch die hineingesteckten positionierbaren Antennen mit Energie versorgt, wodurch die Kommunikation des RFID Reader mit allen RFID Tags sichergestellt ist.

Es kann erwähnt werden, dass der Frequenzbereich, den ein RFID Reader zur Kommunikation mit den RFID Tags nutzt unmittelbar Einfluss auf die maximal erreichbare Kommunikationsreichweite hat. Systeme im HF Frequenzbereich (typische 13,56MHz) haben eine Kommunikationsreichweite von nur bis zu einem Meter, weshalb für Anwendungen - wie oben beschrieben - der UHF Frequenzbereich (860MHz, 960MHz oder beispielsweise 2,45GHz) verwendet wird, bei dem der RFID Reader über einige Meter passive RFID Tags auslesen kann. Systeme im UHF Frequenzbereich haben aber aufgrund der höheren Frequenz größere Probleme die elektromagnetische Abschirmung durch beispielsweise Eis und Schnee oder Flüssigkeiten zu durchdringen, weshalb die erfindungsgemäßen Maßnahmen besonders vorteilhaft bei Systemen in höheren Frequenzbereichen, wie beispielsweise dem UHF Frequenzbereich, einsetzbar sind.

Weiters vorteilhaft ist es die positionierbare Antenne entweder als einzelnen Antennenstab oder als kammförmige Antennengruppe auszubilden, die manuell in die Produkte eingeschoben wird, um ausreichend Energie für alle RFID Tags in die Verpackungseinheit zu bringen.

Besonders vorteilhaft ist es einen maschinell bewegbaren Arm als Positionierungseinrichtung vorzusehen, auf dem die Antenne oder Antennengruppe montiert ist. Wenn auf dem Arm auch noch Detektionsmittel (z.B. eine Kamera, ein Berührungssensor oder eine Lichtschranke) vorgesehen sind, um eine geeignete Position zum Einschieben der Antenne oder Antennengruppe in die Verpackungseinheit zu finden, dann kann vorteilhafterweise verhindert werden, dass Produkte in der Verpackungseinheit durch die automatisch eingeschobene Antenne beschädigt werden. Oft genügt es aber auch bereits die Antenne oder Antennengruppe flexibel auszubilden, um im Fall des Zusammentreffens der Antenne mit einem Produkt ein Ausweichen der Antenne zu bewerkstelligen. Besonders vorteilhaft in diesem Zusammenhang ist es, die positionierbare Antenne als Teleskopantenne auszubilden, die wie ein Teleskop zusammen geschoben wird, wenn sie beim Einschieben in die Verpackungseinheit auf ein Produkt in der Verpackungseinheit trifft.

Es kann aber auch vorteilhaft sein, zusätzlich zu der oder den normalen fix montierten Antennen des RFID Readers auch eine weitere positionierbare Antenne fix montiert vorzusehen. So eine fix montierte Antenne ist dann durch eine Ausbildung gekennzeichnet, die es ermöglicht, dass eine Verpackungseinheit so an den RFID Reader herangeführt werden kann, dass die positionierbare Antenne oder Antennengruppe zumindest teilweise in die Verpackungseinheit geschoben wird. Hierbei erfolgt das Positionieren der positionierbaren Antenne zwar durch eine Bewegung der Verpackungseinheit, wobei aber letztendlich die gleichen erfindungsgemäßen Maßnahmen und Vorteile erhalten werden.

Im Folgenden werden Ausführungsformen der Erfindung in nicht einschränkender Weise unter Bezugnahme auf die Zeichnungen näher erläutert.
Fig. 1 zeigt schematisch einen RFID Reader zum Auslesen von einer Vielzahl an RFID Tags.
Fig. 2 zeigt schematisch eine Palette mit Christbäumen, die je mit einem RFID Tag gekennzeichnet sind, in die mehrere positionierbare Antennen zum verbesserten Auslesen der RFID Tags eingeschoben werden.
Fig. 3 zeigt schematisch eine Palette mit Christbäumen, die je mit einem RFID Tag gekennzeichnet sind, die auf mehrere fix montierte Antennen zum verbesserten Auslesen der RFID Tags geschoben werden.

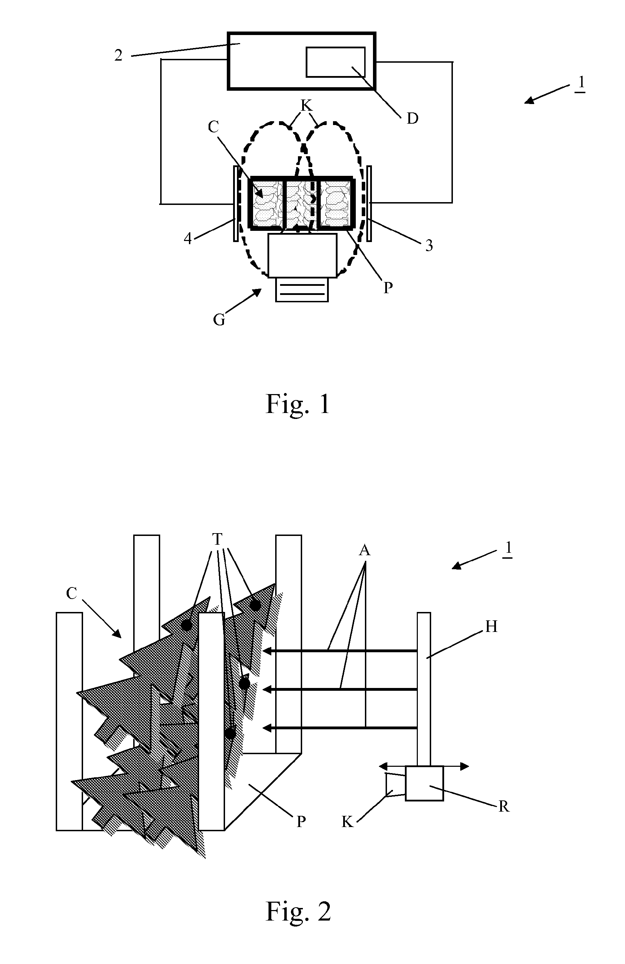

Figur 1 zeigt ein System 1 zum Auslesen von Daten aus an Produkten angebrachten kontaktlos auslesbaren passiven Radio Frequency Identification (RFID) Tags T. Solche RFID Tags T sind seit langem bekannt und beispielsweise gemäß ISO18.000 standardisiert worden. Die RFID Tags T gemäß diesem Ausführungsbeispiel entsprechen dem ISO18.000-6 Standard und arbeiten im UHF Frequenzband. Ein in Figur 1 dargestellter RFID Reader 2 ist durch einen Computer gebildet und an Antennen 3 und 4 angeschlossen, die in einem Abstand von 3,6 Metern zueinander fix montiert sind. Der RFID Reader 2 erzeugt mittels der Antennen 3 und 4 ein elektromagnetisches Wechselfeld im UHF Frequenzbereich und kann über dieses innerhalb einer Kommunikationsreichweite K mit RFID Tags T kommunizieren.

Gemäß dem in der Figur 1 dargestellten Ausführungsbeispiel sind eine Anzahl von 50 Christbäumen C auf einer durch eine Palette P gebildeten Verpackungseinheit befestigt. Die Christbäumen C wurden auf einem Lastwagen geliefert und mit Hilfe eines Gabelstaplers G mit der Palette P von dem Lastwagen gehoben. Ein Lagerarbeiter führt die Palette P samt den Christbäumen C mit dem Gabelstapler G hierauf zwischen die Antennen 3 und 4, um die in den RFID Tags T gespeicherten Kennungen auszulesen und das Ergebnis, wie viele Christbäume welcher Preiskategorie und Qualität auf der Palette P gelagert sind, an einem Display D des RFID Readers 2 anzuzeigen.

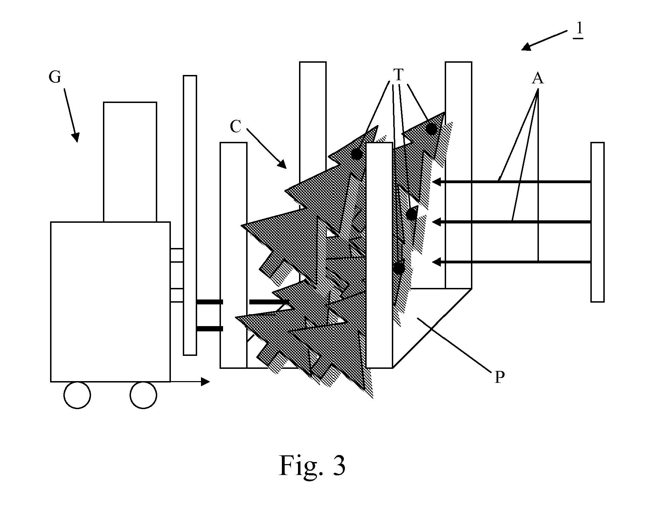

Der in den Figuren 2 und 3 nicht dargestellt Reader 2 weist nunmehr mehrere an einem Antennenhalter H vorgesehene Antennen A auf, die vor dem Lesevorgang durch den RFID Reader 2 in die Christbäume C auf der Palette P geschoben werden. Der RFID Reader 2 gibt hierauf das elektromagnetische Wechselfeld über die positionierten Antennen A ab, die in ihrer aktuellen Position wesentlich näher an den in der Mitte der Palette P gelagerten auszulesenden RFID Tags T positioniert sind als es die fix montierten Antennen 3 und 4 sind. Hierdurch wird auch in den Antennen solcher RFID Tags T ein wesentlich stärkeres elektromagnetische Wechselfeld eingeprägt, die gegebenenfalls mit Eis oder Feuchtigkeit überzogenen sind, wodurch in diesen RFID Tags T mehr Energie erzeugt werden kann. Hierauf sind alle RFID Tags T im Kommunikationsfeld K ausreichend mit Energie versorgt und der RFID Reader 2 beginnt über die Antennen 3 und 4 und auch über die positionierbaren Antennen A die Kommunikation mit den RFID Tags T. Bei dieser Kommunikation wird vorerst ein Anti-Kollisions-Algorithmus und dann ein Daten-Transfer-Algorithmus durchgeführt. Als Ergebnis dieser Kommunikation sind in dem Computer die Seriennummern der einzelnen detektierten RFID Tags T gespeichert, worauf der Computer die Seriennummern den Produktkategorien (z.B. -> Christbaum -> Qualität X / Preiskategorie A) zuordnen kann. Anschließend wird an dem Display 2 die genaue Anzahl der detektierten RFID Tags T mit aus den RFID Tags T ausgelesenen Daten angezeigt. So könnte beispielsweise angezeigt werden, dass 25 Stück Christbäume der Kategorie A und 10 Stück Christbäume der Kategorie B und 15 Stück Christbäume der Kategorie C auf der Palette P gelagert sind.

Das vorstehend beschriebene System 1, der RFID Reader 2 des Systems 1 und das beschriebene Verfahren zum Auslesen der RFID Tags 2 weist nunmehr unter anderem den Vorteil auf, dass sichergestellt ist, dass alle an Produkten auf der Palette P angebrachten RFID Tags T von dem RFID Reader 2 detektiert werden und die am Display 2 dargestellte Information auch zuverlässig richtig ist.

Der RFID Reader 2 weist nunmehr weiters eine Positionierungseinrichtung auf, die durch einen Roboterarm R gebildet ist, der vereinfacht in Figur 2 dargestellt ist. Nachdem der Lagerarbeiter die Palette P zwischen die Antennen 3 und 4 befördert hat betätigt er einen Knopf an dem Computer, worauf der Roboterarm R die Antennen A für den Lesevorgang teilweise in die Christbäume C einschiebt. Nach beendetem Lesevorgang durch den RFID Reader 2 werden die Antennen A von dem Roboterarm R automatisch aus den Christbäumen C gezogen, damit die Palette P weiter transportiert werden kann. Hierdurch ist eine Vereinfachung für den Lagerarbeiter und ein zuverlässiges Positionieren der Antennen A erreicht.

Der Roboterarm R weist nunmehr weiters Detektionsmittel auf, die durch eine Kamera K und eine geeignete Bilderkennungssoftware in dem Computer gebildet sind. Der Roboterarm R ist durch die Detektionsmittel dazu geeignet eine besonders vorteilhafte Stelle zum Hineinschieben der Antennen A in die Christbäume C zu finden, um zu verhindern, dass eine oder mehrere Antennen A an einem Stamm oder dicken Ast eines Christbaums C hängen bleiben oder gegebenenfalls sogar beschädigt werden. Die Antennen A sind zu diesem Zweck auch flexibel - als biegsam - und zusätzlich auch noch als Teleskopantennen ausgebildet. Hierdurch ist der Vorteil erhalten, dass sollte doch einmal ein Stamm oder dicker Ast eines Christbaums C im Weg sein, dass sich die Antenne A entweder seitlich vorbei an dem Stamm verbiegt oder aber die eine Antenne A teleskopartig zusammen schoben wird, während die anderen Antennen A der Antennengruppe korrekt in der Verpackungseinheit positioniert werden.

In Figur 3 ist ein weiteres Ausführungsbeispiel der Erfindung dargestellt, bei dem das Positionieren der Antennen A in der Verpackungseinheit beziehungsweise in den Christbäumen C durch den Lagerarbeiter mit dem Gabelstapler G erfolgt. Die positionierbaren Antennen A sind in diesem Ausführungsbeispiel derart fix montiert, dass sie in dem freien Raum zwischen den Antennen 3 und 4 positioniert sind. Der Lagerarbeiter fährt mit der Palette P an eine vorgegebene Position zwischen den Antennen 3 und 4, wodurch auch die Antennen A in den Christbäumen C positioniert werden. Der Lesevorgang durch den RFID Reader 2 erfolgt hierauf in der vorstehend beschriebenen Weise, worauf der Lagerarbeiter die Palette P nach abgeschlossenem Lesevorgang wieder von dem RFID Reader 2 entfernt. Der Vorteil dieses Ausführungsbeispiels der Erfindung ist dadurch gegeben, dass die Antennen A weder manuell positioniert werden müssen noch müssen gesonderte Positionierungsmittel vorgesehen sein. Auch bei diesem Ausführungsbeispiel der Erfindung ist der Vorteil erhalten, dass die weiter innen liegenden RFID Tags T oder die mit Eis, Schnee oder Feuchtigkeit überzogenen RFID Tags T ausreichende Energie für die Kommunikation mit dem RFID Reader 2 erhalten.

Es kann erwähnt werden, dass es durch unterschiedliche Einflüsse zu einer Abschirmung des elektromagnetischen Wechselfeldes des RFID Readers und hierdurch verschlechterten oder sogar verhinderten Kommunikation mit den RFID Tags kommen kann. Eis, Schnee oder Feuchtigkeit auf den Produkten oder Flüssigkeiten in den Produkten wurden bereits erwähnt. Es kann aber beispielsweise auch durch metallische Folienverpackungen der Produkte (z.B. Schokolade) oder andere dem Fachmann bekannte Umstände zu so einer Abschirmung kommen, in welchem Fall die Verwendung eines erfindungsgemäßen Systems zum Auslesen der Daten aus den RFID Tags besonders vorteilhaft ist.

Es kann erwähnt werden, dass der Antennenhalter eine beliebige Anzahl von Antennen A tragen kann, die je nach Verpackungseinheit und darin befindlichen Produkten hierfür geeignete Formen aufweisen können. Auch kann die Spitze der Antennestäbe geeignet geformt sein, um ein besonders schonendes Positionieren in den Produkten zu ermöglichen.

Gemäß vorstehend beschriebenem Ausführungsbeispiel werden die positionierbaren Antennen A sowohl zum Einbringen des elektromagnetischen Wechselfeldes als auch zur darauf folgenden Kommunikation zum Auslesen der Daten aus dem RFID Tag verwendet. Es kann erwähnt werden, dass die positionierbaren Antennen A je nach Anwendungsfall gegebenenfalls auch nur zum lokalen Einbringen des elektromagnetischen Wechselfeldes oder auch nur zur darauf folgenden Kommunikation verwendet werden könnten.

Es kann erwähnt werden, dass die Ausbildung der Antennen und der sonstigen technischen Eigenschaften des RFID Readers (z.B. Frequenzbereich, Kommunikationsreichweite, Sendeleistung, Kommunikationsprotokoll,...) an den jeweiligen Anwendungsfall und insbesondere an die Art der an den Produkten angebrachten RFID Tags und die jeweiligen Verpackungseinheiten und Produkte angepasst werden kann.

Es kann erwähnt werden, dass beliebige andere Positionierungsmittel, wie beispielsweise ein Fördergurt oder ein Hydraulik- oder Pneumatik-Zylinder, zum Positionieren der Antennen A vorgesehen sein können.

Es kann erwähnt werden, dass bei einem erfindungsgemäßen RFID Reader Mittel vorgesehen sein können, die vor dem Positionieren der Antennen A vorerst Produkte in der Verpackungseinheit an bestimmten Positionen zur Seite schieben, um dann dort die Antennen A hinein schieben zu können.

Es kann erwähnt werden, dass die Antennen A mit Heizmitteln versehen sein können, die kurz vor dem Lesevorgang Wärmestrahlung abgeben, um einen Feuchtigkeitsbelag oder Eisbelag auf den RFID Tags zu reduzieren oder gar zu entfernen und so die Kommunikationseigenschaften dieser RFID Tags zu verbessern.

Es kann erwähnt werden, dass neben Paletten beispielsweise auch Schachteln, Kisten, Säcke oder Netze Verpackungseinheiten sein können, in die Antennen A hinein geschoben werden. Besonders vorteilhaft ist es, wenn die Verpackungseinheiten bereits Positionen vorgeben, an denen die Antennen A leicht hinein geschoben werden können. So könnte beispielsweise in einer Kiste an bestimmten Positionen in der Kiste ein Kunststoffrohr durch die Kiste laufen. Wenn die Produkte in der Kiste beispielsweise Stofftiere sind, die in der Kiste als Schüttgut transportiert werden, dann kann durch Einführen der Antennen A in die Kunststoffrohre keines der Stofftiere beschädigt werden.

Es kann erwähnt werden, dass das erfindungsgemäße System bereits beginnend im Kilohertz Frequenzbereich (z.B. 125kHz) vorteilhaft verwendbar ist, besonders vorteilhaft jedoch im HF Frequenzbereich (z.B. 13,56MHz) und UHF Frequenzbereich (860MHz, 960MHz oder 2,45 GHz) anwendbar ist. In den internationalen Standards ISO18.000 und ISO11.785 sind beispielsweise RFID Tags und RFID Reader für diese Frequenzbereiche standardisiert worden.

Es kann erwähnt werden, dass es vorteilhaft ist eine so genannte Booster-Antenne als positionierbare Antenne in die Verpackungseinheit einzubringen. Eine Booster-Antenne ist eine Antenne, die auf das von dem Reader abgegebene elektromagnetische Wechselfeld abgestimmt ist, um Energie aus dem elektromagnetischen Wechselfeld zu empfangen und ihrerseits das elektromagnetische Wechselfeld verstärkt abzugeben. Hierdurch empfangen die lokal in der Nähe der Booster-Antenne liegenden RFID Tags ein verstärktes elektromagnetisches Wechselfeld, weshalb vorteilhafterweise auch die weiter innen liegenden oder durch Umwelteinflüsse abgeschirmten RFID Tags ausreichend Energie für die Kommunikation mit dem RFID Reader erhalten. Besonders vorteilhaft ist es, die Booster-Antenne als Antennen-Matte auszubilden, bei der in einer z.B. Gummimatte die Antenne geschützt enthalten ist.

Es kann erwähnt werden, dass eine Booster-Antenne aber auch bereits in der Verpackungseinheit selber fix vorgesehen sein könnte. So könnte beispielsweise im Boden der Palette eine Booster-Antenne integriert sein, die durch das Positionieren der Palette in das elektromagnetische Wechselfeld des RFID Readers bereits einsatzbereit ist.

## Patentansprüche

1. System (1) zum Auslesen von Daten aus an Produkten (C) angebrachten kontaktlos auslesbaren passiven RFID Tags (T), wobei eine Vielzahl an Produkten (C) in einer Verpackungseinheit (P) vorgesehen sein kann und wobei ein zumindest eine Antenne (3, 4) aufweisender fix montierter RFID Reader (2) zum kontaktlosen Auslesen der in den RFID Tags (T) gespeicherten Daten ausgebildet ist, **dadurch gekennzeichnet, dass** der RFID Reader (2) zumindest eine positionierbare Antenne (A) aufweist, die zum verbesserten Auslesen der in den RFID Tags (T) gespeicherten Daten für den Lesevorgang zumindest teilweise in die Verpackungseinheit (P) einbringbar ist.

2. System (1) nach Anspruch 1, **dadurch gekennzeichnet, dass** die zumindest eine positionierbare Antenne (A) als Antennenstab ausgebildet ist, der für den Lesevorgang in die Verpackungseinheit (P) zumindest teilweise einbringbar ist.

3. System (1) nach Anspruch 1 oder Anspruch 2, **dadurch gekennzeichnet, dass** die zumindest eine positionierbare Antenne (A) von einer Positionierungseinrichtung (R) automatisiert für den Lesevorgang zumindest teilweise in die Verpackungseinheit (P) einbringbar ist.

4. System (1) nach Anspruch 3, **dadurch gekennzeichnet, dass** die Positionierungseinrichtung (R) zum Einbringen der positionierbaren Antenne (A) in die Verpackungseinheit (P) für den Lesevorgang entweder zum Positionieren der Verpackungseinheit (P) zur in diesem Fall mit dem RFID Reader (2) fix montierten positionierbaren Antenne (A) oder zum Positionieren der positionierbare Antenne (A) zur in diesem Fall für einen Zeitbereich vor, während und nach dem Lesevorgang im Wesentlichen ruhenden Verpackungseinheit (P) ausgebildet ist.

5. System (1) nach einem der vorhergehenden Ansprüche, **dadurch gekennzeichnet, dass** mehrere an einem Antennenhalter vorgesehene Antennen (A) gemeinsam für den Lesevorgang zumindest teilweise in die Verpackungseinheit (P) einbringbar sind.

6. System (1) nach einem der vorhergehenden Ansprüche, **dadurch gekennzeichnet, dass** die positionierbare Antenne (A) als Teleskopantenne ausgebildet ist.

7. System (1) nach Anspruch 4, **dadurch gekennzeichnet, dass** die Positionierungseinrichtung (R) Detektionsmittel (K) aufweist, die zum Detektieren einer geeigneten Position in der Verpackungseinheit (P) ausgebildet sind, um ein Beschädigen der Produkte (C) beim Einbringen der positionierbaren Antenne (A) in die Verpackungseinheit (P) zu verhindern.

8. System (1) nach einem der vorhergehenden Ansprüche, **dadurch gekennzeichnet, dass** die positionierbare Antenne (A) sowohl zum Abgeben von Sendeenergie an die RFID Tags (T) als auch für die Kommunikation mit den RFID Tags während des Lesevorgangs vorgesehen ist.

9. System (1) nach einem der vorhergehenden Ansprüche, **dadurch gekennzeichnet, dass** der RFID Reader (2) zum Abgeben von Sendeenergie und zum Auslesen der RFID Tags (T) im UHF Frequenzbereich ausgebildet ist.

10. System (1) nach einem der vorhergehenden Ansprüche, **dadurch gekennzeichnet, dass** die zumindest eine positionierbare Antenne als Booster-Antenne ausgebildet ist, die für den Lesevorgang in die Verpackungseinheit (P) einbringbar ist und die von der zumindest einen fix montierten Antenne kontaktlos mit Energie versorgt wird und die ihrerseits kontaktlos Energie verstärkt an die passiven RFID Tags (T) in der Verpackungseinheit (P) abgibt.

11. System (1) nach Anspruch 10, **dadurch gekennzeichnet, dass** die Booster-Antenne als Matte ausgebildet ist, in der eine Antenne vorgesehen ist.

12. Verfahren zum Auslesen von Daten aus an Produkten (C) angebrachten kontaktlos auslesbaren passiven Radio Frequency Identification (RFID) Tags (T) mit einem zumindest eine Antenne (3, 4) aufweisenden fix montierten RFID Reader (2), wobei folgende Verfahrensschritte durchgeführt werden:
Positionieren einer eine Vielzahl an Produkten (C) enthaltenden Verpackungseinheit (P) in dem von der zumindest einen Antenne (3, 4) erzeugbaren elektromagnetischen Wechselfeld und
Auslesen der RFID Tags (T) mit dem RFID Reader (R), **dadurch gekennzeichnet, dass** zumindest eine positionierbare Antenne (A) zum verbesserten Auslesen der in den RFID Tag (T) gespeicherten Daten für den Lesevorgang zumindest teilweise in die Verpackungseinheit (P) eingebracht wird.

13. Verfahren gemäß Anspruch 12, **dadurch gekennzeichnet, dass** die zumindest eine positionierbare Antenne (A) entweder manuell oder von Positionierungsmitteln (R) automatisiert für den Lesevorgang in die Verpackungseinheit (P) eingebracht wird.

14. Verfahren gemäß Anspruch 12 oder 13, **dadurch gekennzeichnet, dass** beim Einbringen der positionierbaren Antenne (A) in die Verpackungseinheit (P) Detektionsmittel (R) detektieren, welche Position geeignet zum Einbringen der positionierbaren Antenne (A) in die Verpackungseinheit (P) wäre, um ein Beschädigen der Produkte (C) zu verhindern.

15. RFID Reader zur Verwendung in einem System (1) gemäß Anspruch 1 zum Auslesen von Daten aus an Produkten (C) angebrachten kontaktlos auslesbaren passiven Radio Frequency Identification (RFID) Tags (T), wobei der fix montierte RFID Reader (2) zumindest eine fix montierte Antenne (3, 4) zum kontaktlosen Auslesen der in den RFID Tags (T) gespeicherten Daten aufweist, **dadurch gekennzeichnet, dass** der RFID Reader (2) zumindest eine positionierbare Antenne (A) aufweist, die zum verbesserten Auslesen der in den RFID Tag (T) gespeicherten Daten für den Lesevorgang zumindest teilweise in die Verpackungseinheit (P) einbringbar ist.

16. RFID Reader gemäß Anspruch 15, **dadurch gekennzeichnet, dass** eine kammförmige Antennengruppe für den Lesevorgang in die Verpackungseinheit (P) einbringbar ist.
